(19) Europäisches Patentamt
European Patent Office
Office européen des brevets

(11) **EP 3 314 336 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(21) Anmeldenummer: **16732973.9**

(22) Anmeldetag: **13.06.2016**

(51) Int Cl.:
***G05B 13/04*** *(2006.01)*

(86) Internationale Anmeldenummer:
**PCT/EP2016/063511**

(87) Internationale Veröffentlichungsnummer:
**WO 2016/207012 (29.12.2016 Gazette 2016/52)**

(54) **VERFAHREN ZUR REGELUNG TECHNISCHER PROZESSE MITTELS LINEARISIERUNG**

METHOD FOR CONTROLLING TECHNICAL PROCESSES USING LINEARIZATION

PROCEDE DE REGLAGE DE PROCESSUS TECHNIQUES A L'AIDE DE LA LINEARISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2015 EP 15174008**

(43) Veröffentlichungstag der Anmeldung:
**02.05.2018 Patentblatt 2018/18**

(73) Patentinhaber: **Bayer CropScience AG
40789 Monheim am Rhein (DE)**

(72) Erfinder: **KÜPPER, Achim
51375 Leverkusen (DE)**

(74) Vertreter: **BIP Patents
c/o Bayer Intellectual Property GmbH
Alfred-Nobel-Straße 10
40789 Monheim am Rhein (DE)**

(56) Entgegenhaltungen:
**US-B1- 6 207 936**

**Beschreibung**

Die Erfindung betrifft ein Verfahren zur Regelung eines technischen Prozesses mit einem Regler, der eine Stellgröße erzeugt, wobei eine Regelgröße in etwa eine Stufenfunktion in Abhängigkeit der Stellgröße ist.

Bei der Temperaturregelung einer Destillationskolonne besteht ein stark nichtlinearer Einfluss zwischen der zu regelnden Temperatur in der Kolonne als Regelgröße und der Stellgröße in Form eines Dampfstroms, mit dem ein Verdampfer der Kolonne mit Wärmeenergie versorgt wird. Die Abhängigkeit der zu regelnden Temperatur von dem Dampfstrom lässt sich wie folgt charakterisieren: In einem ersten Abschnitt des Wertebereichs für den Dampfstrom befindet sich die Temperatur auf einem ersten Plateau, auf dem sich die Werte kaum voneinander unterscheiden. Dieser Abschnitt entspricht einem Teil des Temperaturprofils über der Höhe der Kolonne, in dem bereits nahezu Reinstoff bzw. eine konstante stoffliche Zusammensetzung vorliegt. In einem zweiten oder mittleren Abschnitt des Wertebereichs des Dampfstroms ist ein steiler Übergang in Form eines deutlichen Temperaturanstiegs von dem ersten Niveau auf ein zweites Niveau gegeben. Dieser Abschnitt entspricht dem mittleren Teil des Temperaturprofils über der Höhe der Kolonne, in dem eine Mischung der Reinstoffe vorliegt. In einem dritten Abschnitt des Wertebereichs des Dampfstroms ändert sich die auf dem zweiten Niveau befindliche Temperatur wiederum hingegen kaum, wenn der Dampfstrom in diesem Wertebereich weiter erhöht wird. Dieser Abschnitt entspricht einem Teil des Temperaturprofils über der Höhe der Kolonne, in dem bereits nahezu Reinstoff bzw. eine konstante stoffliche Zusammensetzung vorliegt.

Dieses stark nichtlineare Temperaturprofil hat die Eigenschaft, dass eine Änderung des Dampfstroms einen unterschiedlich starken Einfluss auf die Temperatur in Abhängigkeit der absoluten Größe des anliegenden Dampfstroms hat. Weist der Dampfstrom kleine Werte auf, die in dem ersten Wertebereich liegen, so führt eine Änderung des Dampfstromes nur zu sehr kleinen Temperaturänderungen, da hier die Temperatur sich auf dem ersten, nahezu konstanten Niveau befindet. Gleiches gilt sinngemäß für hohe Dampfströme, die im dritten Abschnitt des Wertebereichs liegen. Auch hier ist es aufgrund des zweiten, nahezu konstanten Temperaturniveaus nur durch große Änderungen des Dampfstroms möglich, die Temperatur nennenswert zu verändern. Daher muss der Regler bei diesen beiden Temperaturplateaus vergleichsweise hart reagieren, um den Sollwert zu halten und Prozessstörungen auszuregeln. Befindet sich der Dampfstrom aber im zweiten Abschnitt des Wertebereichs, führen bereits kleine Änderungen des Dampfstroms zu großen Änderungen der Temperatur. Hier muss der Regler entsprechend schwach reagieren.

Die oben beschriebene stark nichtlineare Abhängigkeit macht die Temperaturregelung in einer Destillationskolonne schwierig. Störungen, wie beispielsweise Druckschwankungen im Dampfnetz, welches den Dampfstrom bereitstellt, können dabei zu schwerwiegenden Regelungsproblemen führen, die in der Vergangenheit eine Abschaltung der Destillationskolonne zu Folge hatten. Die damit einhergehenden Ausfallzeiten beinträchtigen zum Teil wesentlich den effektiven Betrieb der Destillationskolonne. US6207936 beschreibt ein Verfahren zur Regelung eines technischen Prozesses.

Der Erfindung liegt daher die Aufgabe zu Grunde, für technische Prozesse, bei denen eine Regelgröße in Form einer oben beschriebenen Stufenfunktion von der Stellgröße abhängt, ein einfaches Regelungsverfahren bereit zu stellen, das zu einem robusten und stabilen Betrieb des Prozesses führt.

Die der Erfindung zu Grunde liegende Aufgabe wird mit dem Verfahren gemäß Anspruch 1 gelöst. Bevorzugte Ausführungsbeispiele können den Unteransprüchen entnommen werden.

Erfindungsgemäß ist vorgesehen, dass die Stufenfunktion durch eine Sigmoid-Funktion approximiert wird. Die Sigmoid-Funktion, auch als Schwanenhalsfunktion oder S-Funktion bekannt, ist eine mathematische Funktion mit einem S-förmigen Graphen. Die Sigmoid-Funktion ist eine beschränkte und differenzierbare reelle Funktion mit einer durchweg positiven oder durchweg negativen ersten Ableitung und genau einem Wendepunkt. Die Ableitung weist somit ein Extremum im Wendepunkt der Funktion auf.

Wird beispielsweise der Wertebereich der Stellgröße in drei große Abschnitte unterteilt, so dass der erste Abschnitt, der zweite Abschnitt und der dritte Abschnitt jeweils gleich breit sind, und die Regelgröße für diesen Wertebereich zwischen 0 % und 100 % variiert, so soll in einem Ausführungsbeispiel für die Stufenfunktion die Regelgröße sich im ersten Abschnitt und im zweiten Abschnitt nicht mehr als um jeweils 15 % unterscheiden. Im zweiten Bereich liegen somit Werte für die Regelgröße, die sich um 70 % oder mehr unterscheiden können. In einem anderen Ausführungsbeispiel, ebenfalls gleichbreite Abschnitte unterteilt, variieren die Werte für die Regelgröße in dem ersten und zweiten Abschnitt um jeweils maximal 10 %.

Für die Sigmoid-Funktion f wird eine Umkehrfunktion f$^{-1}$ gebildet. Die Umkehrfunktion oder inverse Funktion ist eine Funktion, die jedem Element der Zielmenge sein eindeutig bestimmtes Urbildelement zuweist. Mittels der Umkehrfunktion wird die Regelgröße R in eine Hilfsregelgröße $R_h$ transformiert

.

$$R_h = f^{-1}(R) \qquad\qquad (1)$$

$R_h$    Hilfsregelgröße;
R    Regelgröße;
$f^{-1}$    Umkehrfunktion der Sigmoidfunktion f.

Auch die Führungsgröße F, die als Sollwert für die zu regelnde Regelgröße R bezeichnet werden kann, wird mittels der Umkehrfunktion in eine Hilfsführungsgröße $F_h$ transformiert:

$$F_h = f^{-1}(F) \tag{2}$$

$F_h$    Hilfsführungsgröße;
F    Führungsgröße.

Die Hilfsregelgröße $R_h$ und die Hilfsführungsgröße $F_h$ dienen dem Regler als Basis für die Erzeugung der Stellgröße S. Das Erzeugen der Stellgröße S umfasst dabei auch ein Berechnen oder Ermitteln der Stellgröße S. In einem Ausführungsbeispiel wird die Differenz zwischen der Hilfsführungsgröße $F_h$ und der Hilfsregelgröße $R_h$ gebildet, wobei diese Differenz dann an den Regler geleitet wird bzw. diese Differenz der Berechnung oder Ermittlung der Stellgröße S durch den Regler (z.B. PID, MPC) zu Grunde liegt.

In einem Ausführungsbeispiel wird für die Sigmoid-Funktion eine arctan-Funktion (arcus tangens) verwendet. Vorzugsweise weist sie folgende Form auf:

$$R = f_{\text{arctan}}(S_R) = a + b * \text{arctan}[(S - c) * d] \tag{3}$$

R    Regelgröße;
S    Stellgröße;
a    erste Konstante;
b    zweite Konstante;
c    dritte Konstante; und
d    vierte Konstante.

Die Umkehrfunktion der arctan-Funktion ist die tan-Funktion (tangens). Auf der Basis von Gleichungen (1) und (3) folgt dann:

$$R_h = f_{\text{arctan}}^{-1}(R) = \frac{\tan\left[\dfrac{R - a}{b}\right]}{d} + c \tag{4}$$

Die Gleichung (4) lässt sich auch für die Bestimmung der Hilfsführungsgröße $F_h$ in Abhängigkeit der Führungsgröße F verwenden:

$$F_h = f_{\text{arctan}}^{-1}(F) = \frac{\tan\left[\dfrac{F - a}{b}\right]}{d} + c \tag{4b}$$

In beiden Fällen ist zu beachten, dass das Argument der tan-Funktion zwischen $-0.5\pi$ und $0.5\pi$ liegen muss, um die Hilfsregelgröße $R_h$ und die Hilfsführungsgröße $F_h$ jeweils eindeutig berechnen zu können und insbesondere durch die Umrechnung Sprünge in der Regelgröße, die sich über den Regler auf die Stellgröße auswirken, zu vermeiden. Daher sollten die Regelgröße R zwischen

$$-\frac{\pi}{2}b + a < R < +\frac{\pi}{2}b + a \tag{5}$$

und die Führungsgröße F zwischen

$$-\frac{\pi}{2}b + a < F < +\frac{\pi}{2}b + a \tag{5b}$$

liegen. Eine Regelgröße, die sich außerhalb dieser Grenzen befindet, kann durch einen Limit-Block (bei Verletzung wird die Regelgröße auf den Grenzwert gesetzt) abgefangen werden.

Als Sigmoid-Funktion kann auch eine tanh-Funktion (tangens hyperbolicus) verwendet werden. Sie kann folgende Form aufweisen:

$$R = f_{\tanh}(S) = a + b * \tanh[(S-c)*d] = a + b * \frac{e^{[2(S-c)*d]} - 1}{e^{[2(S-c)*d]} + 1}, \tag{6}$$

Die Umkehrfunktion für die tanh-Funktion ist die arctanh-Funktion (arcus tangens hyberbolicus). Auf der Basis der Gleichungen (6) und (1) folgt dann:

$$R_h = f_{\tanh}^{-1}(R) = f_{\arctan h}(R) = \frac{\operatorname{atanh}\left[\dfrac{R-a}{b}\right]}{d} + c = \frac{1}{2}\frac{1}{d}\ln\left(\frac{1 + \dfrac{R-a}{b}}{1 - \dfrac{R-a}{b}}\right) + c \tag{7}$$

Die Gleichung (7) lässt sich auch für die Bestimmung der Hilfsführungsgröße $F_h$ in Abhängigkeit der Führungsgröße F verwenden.

$$F_h = f_{\tanh}^{-1}(F) = f_{\arctan h}(F) = \frac{\operatorname{atanh}\left[\dfrac{F-a}{b}\right]}{d} + c = \frac{1}{2}\frac{1}{d}\ln\left(\frac{1 + \dfrac{F-a}{b}}{1 - \dfrac{F-a}{b}}\right) + c \tag{7b}$$

Hierbei ist zu beachten, dass das Argument der arctanh-Funktion zwischen -1 und 1 liegen muss, wenn die Gleichung (7) bzw. Gleichung (7b) ein eindeutiges Ergebnis liefern soll. Daher müssen die gemessene Regelgröße R zwischen

$$-b + a < R < +b + a \tag{8}$$

und die Führungsgröße F zwischen

$$-b + a < F < +b + a \tag{8b}$$

liegen. Wenn sich die Regelgröße R außerhalb dieser Grenzen befindet, kann, wie oben bereits im Fall der tan-Funktion, die Regelgröße auf den Grenzwert gesetzt werden (Limit-Block). Dies gilt analog auch für die Führungsgröße F.

Eine dritte Sigmoid-Funktion ist die Funktion

$$\frac{x}{\sqrt{1 + x^2}} \tag{9}$$

Diese Funktion wird als algebraische-Funktion aleq1 bezeichnet. Bezogen auf die technische Problemstellung kann sie folgende Form annehmen:

$$R = f_{aleq1}(S) = a + b * \frac{(S-c)*d}{\sqrt{1+((S-c)*d)^2}} \cdot \qquad (9b)$$

Auf der Basis der Gleichungen (9b) und (1) folgt dann:

$$R_h = f_{aleq1}^{-1}(R) = \frac{1}{d}\frac{\left[\dfrac{R-a}{b}\right]}{\sqrt{1-\left[\dfrac{R-a}{b}\right]^2}} + c \qquad (9c)$$

Die Umkehrfunktion der Gleichung (9b) lässt sich auch für die Bestimmung der Hilfsführungsgröße $F_h$ in Abhängigkeit der Führungsgröße F verwenden.

$$F_h = f_{aleq1}^{-1}(F) = \frac{1}{d}\frac{\left[\dfrac{F-a}{b}\right]}{\sqrt{1-\left[\dfrac{F-a}{b}\right]^2}} + c , \qquad (9d)$$

Es ist zu beachten, dass das Argument R bzw. F der algebraischen-Funktion aleq1 zwischen *a - b* und *a + b* liegen muss.

Eine vierte Sigmoid-Funktionen ist die Funktion

$$\frac{x}{1+|x|} \qquad (10)$$

Diese Funktion wird als algebraische-Funktion aleq2 bezeichnet. Bezogen auf die technische Problemstellung kann sie folgende Form annehmen:

$$R = f_{aleq2}(R_h) = a + b * \frac{(S-c)*d}{1+|(S-c)*d|} , \qquad (10b)$$

Auf der Basis der Gleichungen (10b) und (1) folgt dann:

$$R_h = f_{aleq2}^{-1}(R) = \frac{1}{d}\frac{\left[\dfrac{R-a}{b}\right]}{1-\left|\dfrac{R-a}{b}\right|} + c \qquad (10c)$$

Die Umkehrfunktion der Gleichung (10b) lässt sich auch für die Bestimmung der Hilfsführungsgröße $F_h$ in Abhängigkeit der Führungsgröße F verwenden.

$$F_h = f_{aleq2}^{-1}(F) = \frac{1}{d} \frac{\left[\dfrac{F-a}{b}\right]}{1 - \left|\dfrac{F-a}{b}\right|} + c \qquad (10d)$$

Es ist zu beachten, dass der Argument R bzw. F der algebraische-Funktion aleq2 zwischen $a - b$ und $a + b$ liegen muss.

Um die vorliegende Stufenfunktion durch die Sigmoid-Funktion zu approximieren, müssen für die einzelnen Konstanten konkrete Werte ermittelt werden. Diese Werte werden dabei so festgelegt, dass die Sigmoid-Funktion eine möglichst gute Näherung der Stufenfunktion des technischen Prozesses darstellt.

Die Stufenfunktion selbst kann auf Messergebnissen beruhen. Sie kann auch das Ergebnis eines Modells sein, dem zum Beispiel thermodynamische Ansätze zu Grunde liegen.

Einzelne Konstanten bzw. Parameter, die bei der Approximation durch die Sigmoid-Faktoren ermittelt werden müssen, können grob geschätzt werden, während dann die übrigen Konstanten oder Parameter beispielsweise über eine Least-Squares Optimierung berechnet werden. Auf der Basis der Gleichung (3), bei der die Sigmoid-Funktion durch eine arctan-Funktion dargestellt wird, kann die Lage des Wendepunkts abgeschätzt werden. Dabei werden die Konstanten a und c festgelegt. Die verbleibenden Konstanten b und d lassen sich dann über die folgende Gleichung berechnen

$$\min_{b,d} \sum_{k=1}^{n} w_k \left( \frac{R_{prof,k} - R_k}{R_{prof,k}} \right)^2 , \qquad (11)$$

$$s.t.\ R_k = f_{\arctan}(S_k),\ siehe\ Gleichung\ (3)$$

$R_{prof,k}$     Regelgröße gemäß der Stufenfunktion an der Stelle k;
$S_k$     Stellgröße an der Stelle k;
$R_k$     Regelgröße gemäß Sigmoidfunktion in Abhängigkeit von der Stellgröße $S_k$; und
$w_k$     Gewichtungsfaktor.

Der Gewichtungsfaktor $w_k$ weist bevorzugt den Wert gleich 1 auf. Um auf Ausreißer bei der Parameterfestlegung reagieren zu können, kann dieser auf null gesetzt werden. Damit werden die Ausreißer nicht berücksichtigt und stehen einer möglichst guten Approximation durch die Sigmoid-Funktion nicht entgegen.

Anstelle der Stellgröße S kann in dem erfindungsgemäßen Verfahren auch eine relative Stellgröße $S_R$ verwendet werden, die bevorzugt im Wesentlichen proportional zur Stellgröße S ist. Es ergibt sich somit folgender Zusammenhang:

$$S_R = K \cdot S \qquad (12)$$

S     Stellgröße
$S_R$     relative Stellgröße; und
K     Proportionalitätskonstante.

Somit kann beispielsweise in Gleichung (3) anstelle der Stellgröße S unter Anpassung des Parameters d die relative Stellgröße $S_R$ verwendet werden. Entsprechend führt eine Approximation durch die Sigmoid-Funktion ebenfalls zu einer Funktion, in der die Regelgröße R von der relativen Stellgröße $S_R$ abhängt.

Die Ermittlung der Konstanten a, b, c, und d kann anhand von Online-Messungen durchgeführt werden. Vorzugsweise werden dafür mindestens vier Sensoren verwendet, die die Regelgröße an verschiedenen Stellen des Wertebereichs der Stellgröße bzw. der relativen Stellgröße erfassen. Einer der vier Sensoren sollte möglichst das erste Plateau, ein anderer Sensor das zweite Plateau erfassen. Die beiden übrigen Sensoren sollten ungefähr im Übergangsbereich installiert sein.

In dem erfindungsgemäßen Verfahren wird bevorzugt für den Regler ein PID-Regler verwendet. Ein weiteres Beispiel für einen geeigneten Regler ist ein MPC-Regler (Modell-Prädiktiver-Regler).

Das erfindungsgemäße Verfahren kann für die Temperaturregelung in einer Destillationskolonne eingesetzt werden, durch die ein zu trennendes Gemisch in mindestens ein Destillat oder Kopfprodukt und in ein Sumpfprodukt aufgeteilt wird. Die zu regelnde Regelgröße ist dabei eine Temperatur T in der Destillationskolonne, wobei diese Temperatur an einer bestimmten Stelle oder Höhe der Destillationskolonne erfasst wird. Die Führungsgröße ist dabei eine Solltemperatur, die an dieser Stelle der Destillationskolonne herrschen soll. Beispielsweise kann es sich um eine DMAC-Kolonne handeln, bei der Roh-Dimethlyacetamid destillativ gereinigt wird. Bei dem Kopfprodukt handelt es sich in diesem Fall um Rein-Dimethlyacetamid.

Die Stellgröße S kann eine Energie oder Wärmezufuhr für einen Verdampfer der Kolonne sein, durch den ein der Kolonne zugeführtes Gemisch verdampft wird. Beispielsweise kann die Wärme in Form von Heißdampf aus einem Dampfversorgungsnetz zugeführt werden, wobei der Dampf zentral in einem Heizwerk oder in einem Heizkraftwerk erzeugt werden kann.

Eine andere mögliche Stellgröße S ist das Verhältnis zwischen dem der Kolonne entnommenen Destillat und einem Rücklauf, der in Form eines Kondensats der Kolonne wieder zugeführt wird. Eine weitere mögliche Stellgröße S ist der Rücklaufstrom. Ein größerer Rücklauf führt dabei zu kleineren Temperaturen in der Kolonne.

Soweit ihre Verwendung vorgesehen ist, kann als relative Stellgröße $S_R$ die Stufenzahl in der Kolonne fungieren. Gemäß Gleichung (3) und bei Zugrundelegung einer Temperaturregelung in der Kolonne ergibt sich dann eine Abhängigkeit zwischen der zu regelnden Temperatur und der Stufenzahl:

$$T = f_{\text{arctan}}(tray) = a + b * \arctan[(tray - c) * d] \tag{13}$$

T      Temperatur; und
tray     Stufenzahl, entspricht der relativen Stellgröße $S_R$.

Die dieser Funktion zu Grunde liegende Stufenfunktion, welches es zu approximieren gilt, zeigt dann ebenfalls die Abhängigkeit der Temperatur von der Stufenzahl. Es hat sich herausgestellt, dass der Dampfstrom zur Erhitzung des Verdampfers in guter Näherung proportional zur Stufenzahl ist. So führt eine Erhöhung des Dampfstroms in Höhe eines gewissen Betrags zu einer linearen Verschiebung des Temperaturprofils (der Stufenfunktion) um beispielsweise eine Stufe.

Ein weiteres Beispiel für den technischen Prozess, der mit dem erfindungsgemäßen Verfahren geregelt werden kann, ist die Neutralisation einer Säure mit einer Base bzw. die Neutralisation einer Base mit einer Säure. Die Regelgröße ist der pH-Wert, der durch kontinuierlichen Zufluss von Säure und Base beeinflusst wird. Die zu approximierende Stufenfunktion ist eine Titrationskurve, die den pH-Wert der Lösung in Abhängigkeit des Anteils der Säure bzw. der Lauge darstellt. Liegen starke Säuren und Basen vor, so liegt, sofern der Salzfehler nur einen geringen Einfluss hat, ein Äquivalenzpunkt bei pH = 7, in dessen Nähe eine geringe Säure- bzw. Basezugabe zu einer erhebliche pH-Änderung führt. Die Umgebung um den Äquivalenzpunkt stellt somit in der Stufenfunktion den zweiten Bereich des Wertebereichs der Stellgröße dar, in dem ein steiler Übergang zwischen den nahezu konstanten Plateaus gegeben ist. Die Stufenfunktion für die pH-Neutralisation kann auf einer Titrationskurve beruhen, die durch Anlagenversuche oder durch den Einsatz eines Modells, das für die Berechnung des pH-Werts das Ionenprodukt des Wassers, die Elektroneutralität, den Temperatureinfluss und den Salzfehler berücksichtigt, ermittelt wird.

Die Regelgröße bei der Neutralisation der Säure mit der Base ist bevorzugt der pH-Wert. In einem kontinuierlichen Neutralisationsprozess, dem ein konstanter Säurestrom zugeführt wird, kann die Stellgröße der Massenstrom der Base (zum Beispiel in kg/h angegeben) sein. Bei einem konstanten Basemassenstrom könnte hingegen der Säuremassenstrom die Größe sein, deren Regelung zu dem gewünschten pH-Wert führt. Beispielsweise kann es sich um eine Anlage mit kontinuierlicher Betriebsweise zur Neutralisation von Natronlauge mit Salzsäure handeln. Bei dem Produkt handelt sich um Wasser von pH Wert 8 mit hohem Salzgehalt.

Das erfindungsgemäße Verfahren kommt für technische Prozesse, die durch ein stark nicht-lineares Verhalten in Form einer Stufenfunktion zwischen Stellgröße und Regelgröße charakterisiert sind, zur Anwendung. Anhand der Sigmoid-Funktion, durch die die Stufenfunktion approximiert wird, und mit Hilfe der Umkehrfunktion der Sigmoid-Funktion wird für die Regelgröße eine Hilfsregelgröße erzeugt, die durch einen nahezu linearen Zusammenhang mit der Steigung 1 zwischen Stellgröße und Hilfsregelgröße gekennzeichnet ist. Mit anderen Worten entspricht gemäß diesem Zusammenhang die Stellgröße der Hilfsregelgröße. Wird eine relative Stellgröße verwendet, entspricht gemäß diesem Zusammenhang die relative Stellgröße der Hilfsregelgröße.

Da die Umrechnung zwischen Regelgröße und Hilfsregelgröße eindeutig ist, konvergiert die Regelgröße gegen die Führungsgröße bzw. den Sollwert, wenn die Hilfsregelgröße gegen die Hilfsführungsgröße konvergiert. Da darüber eine Linearisierung des Prozessverhaltens erreicht wird, lässt sich der Prozess robust über einen linearen Regler (z.B. PID, MPC) effektiv in einem einfachen Regelungsschema regeln.

Das Verfahren lässt sich bevorzugt für die oben beschriebenen zwei Anwendungsbeispiele anwenden. Im Falle einer Temperaturreglung einer Destillationskolonne ist es bevorzugt die örtliche Position des Temperaturprofils über der Höhe einer Destillationskolonne (relative Stellgröße), welche durch eine Variation der Stellgröße entlang der Höhe der Destillationskolonne verschoben wird. Der Zusammenhang zwischen Stellgröße (Dampfstrom zum Verdampfer bzw. Rücklaufverhältnis der Kolonne) und der örtlichen Position bzw. der Hilfsregelgröße ist (nahezu) linear. Im Falle einer pH-Reglung eines Neutralisationsprozesses ist es die örtliche Position der pH-Durchbruchskurve, die abhängig von der Stellgröße (Säurestrom bzw. Laugestrom) ist. Die örtliche Position der pH-Durchbruchskurve ist dabei linear zu einem Verhältnis zwischen Stellgröße (Säurestrom/ Basestrom) und Störgröße (Basestrom/Säurestrom), das für einen bestimmten pH-Wert erforderlich ist. Auch hier ergibt sich ein linearer Zusammenhang zwischen der Stellgröße und der Verhältnis der Massenströme.

Anhand der Figuren soll die Erfindung näher erläutert werden. Es zeigen:

Figur 1 ein Blockschaltbild eines Regelkreises gemäß der Erfindung;

Figur 1b das Blockschaltbild der Figur 1 mit einer Erweiterung;

Figur 2 eine Sigmoid-Funktion für eine Regelgröße, eine entsprechende Umkehrfunktion für die Hilfsregelgröße sowie die daraus resultierenden Funktion der Hilfsregelgröße in Abhängigkeit der Stellgröße;

Figur 3 schematisch eine Destillationskolonne mit einem Temperaturverlauf;

Figur 4 eine Sigmoid-Funktion für eine zu regelnde Temperatur in einer Destillationskolonne, eine entsprechende Unkehrfunktion sowie der Zusammenhang zwischen Hilfsregelgröße und einer Stufenzahl der Kolonne; und

Figur 5 eine Sigmoid-Funktion für einen zu regelnden pH-Wert einer Säure-Base-Mischung, eine entsprechende Unkehrfunktion sowie der Zusammenhang zwischen Hilfsregelgröße und einem Basemassenstrom.

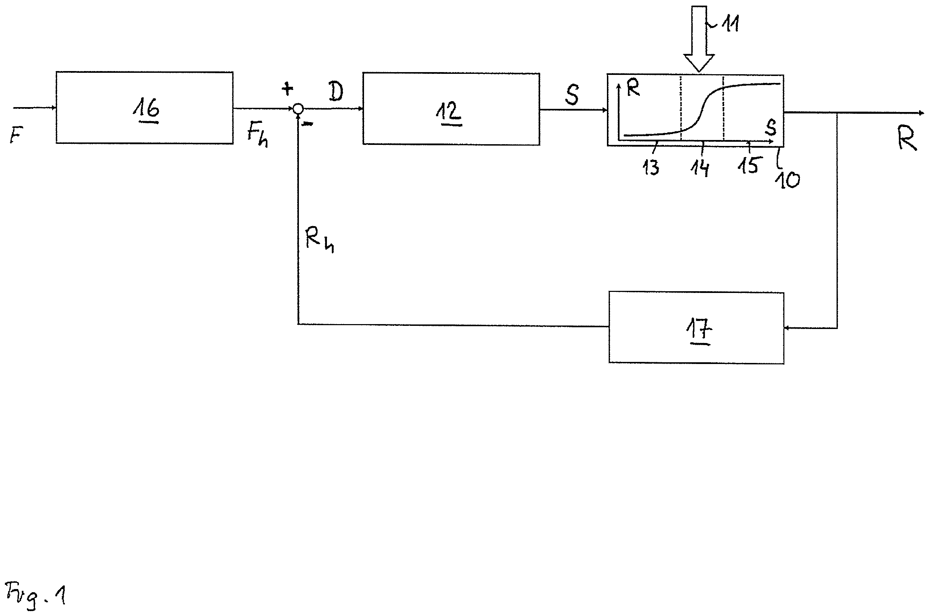

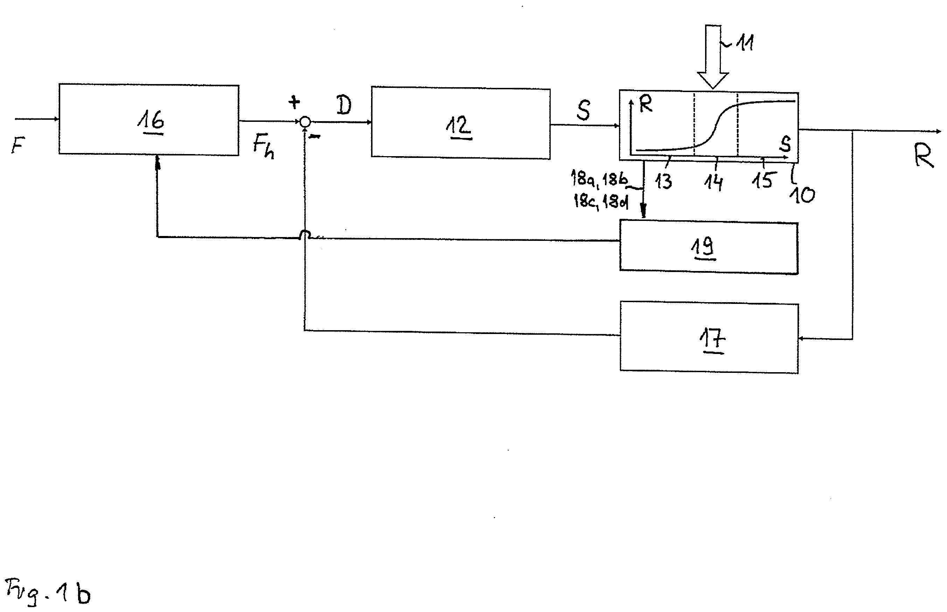

Figur 1 zeigt einen Regelkreis 1, durch den ein technischer Prozess geregelt werden soll. Genau genommen soll eine Regelgröße R geregelt werden, die sich aus dem technischen Prozess ergibt. Der technische Prozess oder auch die sogenannte Regelstrecke ist in Figur 1 durch den Block 10 dargestellt. Auf den Prozess 10 wirken Störgrößen 11, durch die die Regelgröße R beeinflusst wird. Ziel der Regelung ist es, über eine Stellgröße S den Prozess so zu beeinflussen, dass die Regelgröße R einen vorgegebenen Sollwert einnimmt. Dieser Sollwert wird üblicherweise als Führungsgröße bezeichnet und ist in Figur 1 mit F gekennzeichnet. Im Block 10 ist eine Stufenfunktion dargestellt, die die grundsätzliche Abhängigkeit zwischen der Stellgröße S und der Regelgröße R angeben soll. Die Erfassung der Stufenfunktion kann auf einzelnen Messwerten basieren bzw. eine bestimmte Anzahl von gemessenen Punktepaaren sein. Diese Messwerte können auch online genutzt werden, um die Stufenfunktion im laufenden Betrieb der Anlage anzupassen, siehe Figur 1b. Die Stufenfunktion kann aber auch Ergebnis einer (thermodynamischen) Simulation des Prozesses 10 sein, das durch einzelne Messwerte kalibriert oder verifiziert worden sein kann.

In einem ersten Abschnitt 13 des Wertebereichs der Stellgröße S ist die Stufenfunktion näherungsweise konstant und bildet ein erstes Plateau aus. Dem ersten Abschnitt 13 folgt ein zweiter Abschnitt 14, der durch eine steile Änderung (hier einen Anstieg) geprägt ist. Dem schließt sich ein dritter Abschnitt 15 an, der keine nennenswerte Änderungen aufweist und entsprechend durch ein nahezu konstantes, zweites Plateau gekennzeichnet ist. Das zweite Plateau liegt hier über dem ersten Plateau.

Die Ermittlung/Berechnung sowie die Erzeugung der Stellgröße erfolgt über einen Regler 12. Der Regler 12 soll somit auch Anordnungen umfassen, bei denen eine Steuergröße durch einen Computer berechnet wird. Die Steuergröße wird in diesem Fall an ein Stellglied geleitet, das die Stellgröße erzeugt bzw. die Stellgröße vorgibt. Das Stellglied würde also hier auch als ein Teil des Reglers 12 anzusehen sein. Der Regler 12 ermittelt/erzeugt die Stellgröße S auf Basis einer Regeldifferenz D. Die Regeldifferenz D ergibt sich aus der Differenz einer Hilfsführungsgröße $F_h$ und einer Hilfsregelgröße $R_h$.

In Block 16 erfolgt die Umwandlung von der Führungsgröße F in die Hilfsführungsgröße $F_h$ anhand der invertierten Sigmoid-Funktion. Diese in Block 16 verwendete Umrechnung wird auch zu Grunde gelegt bei der Umwandlung der Regelgröße R in die Hilfsregelgröße $R_h$ (siehe Block 17).

Erfindungsgemäß wird die Stufenfunktion, die den technischen Prozess in Abhängigkeit der Variablen R, S abbildet, durch eine Sigmoid-Funktion approximiert. Die Ableitung der Sigmoid-Funktion ist stets positiv oder negativ und hat genau ein lokales Extremum. Entsprechend hat die Sigmoid-Funktion genau einen Wendepunkt.

Figur 1b zeigt einen Regelkreis 1, der den Regelkreise in Figur 1 um einen Block 19 für eine online Schätzung der Stufenfunktion erweitert. Die online Schätzung erfolgt anhand von Messungen in der Anlage, die den Verlauf der Stufenfunktion anhand der örtlichen Prozessgröße erfassen. Die Schätzung der Stufenfunktion erfolgt anhand der Messungen 18a, 18b, 18c, 18d und anhand von Gleichung (11). Die Umwandlung der Führungsgröße F in die Hilfsführungs-

größe $F_h$ (Block 16) und der der Regelgröße R in die Hilfsregelgröße $R_h$ (Block 17) erfolgt anhand der invertierten Stufenfunktion.

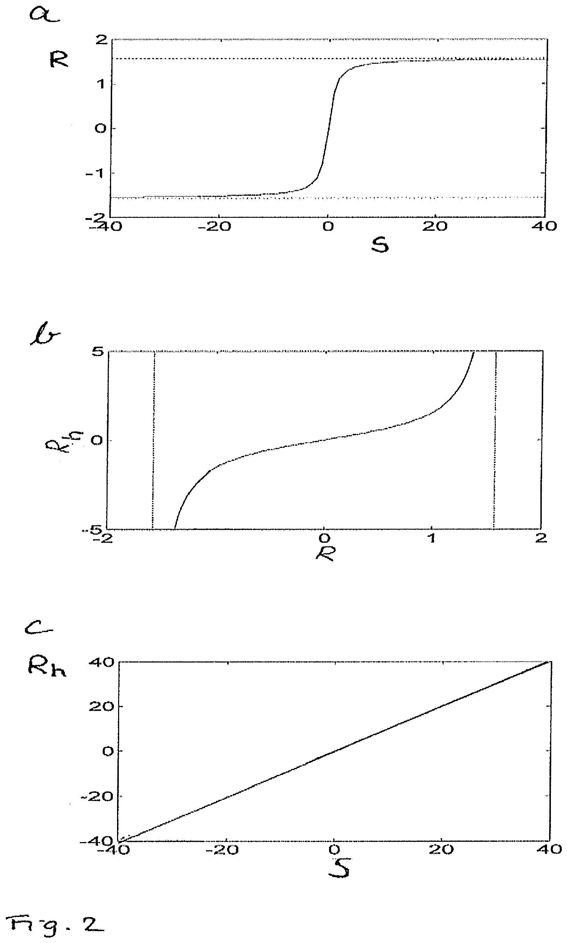

Exemplarisch für die Sigmoid-Funktion wird in Figur 2 (siehe Figur 2a) eine arctan-Funktion R = $f_{arctan}$(S) dargestellt. Der Wendepunkt der arctan-Funktion liegt bei S=0. Bei kleinen Werten von S geht die arctan-Funktion gegen - $0,5\pi$. Bei großen Werten von S geht die arctan-Funktion gegen $0,5\pi$.

Für die Sigmoid-Funktion wird die Umkehrfunktion ermittelt. Im Fall der arctan-Funktion gemäß Figur 2a ist dies eine tan-Funktion. Mit der Umkehrfunktion wird die Regelgröße R in die Hilfsregelgröße $R_h$ umgerechnet. Dies gilt sinngemäß auch für die Führungsgröße F. Sie wird in die die Hilfsführungsgröße $F_h$ umgerechnet.

Figur 2c zeigt die Abhängigkeit der Hilfsregelgröße $R_h$ von der Stellgröße S. Bedingt durch die Umkehrfunktion wird die stark nichtlineare Abhängigkeit zwischen Regelgröße R und Stellgröße S gemäß der Sigmoid-Funktion, welche die Stufenfunktion approximiert, in eine lineare Abhängigkeit zwischen Hilfsregelgröße $R_h$ und Stellgröße S umgewandelt. Die Steigung dabei beträgt 1.

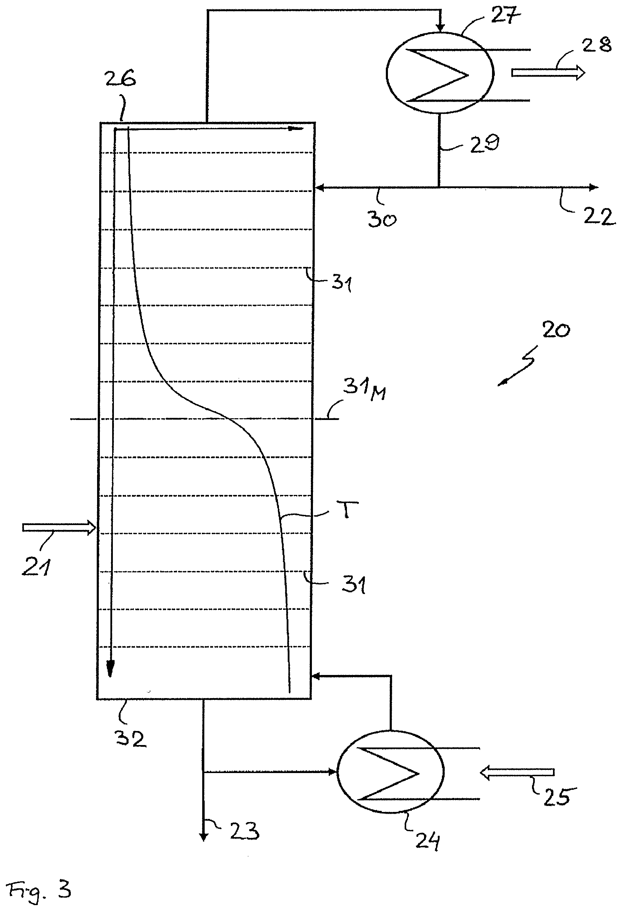

Figur 3 zeigt schematisch eine Destillationskolonne 20. Die Destillationskolonne 20 dient dazu, ein kontinuierlich zugeführtes Gemisch 21 aufzuteilen in ein Kopfprodukt 22 und ein Sumpfprodukt 23. Dazu wird das flüssige Gemisch 21 in einem Verdampfer 24 erhitzt, so dass es verdampft. Die für den Verdampfer erforderliche Wärme wird über einen Dampfstrom 25 bereitgestellt. Am oberen Ende der Destillationskolonne, also an einem Kopf 26 der Destillationskolonne wird das Kopfprodukt 22 abgeführt, nachdem es in einem Kühler 27 kondensiert ist. Die dem Prozess entzogene Wärme wird mit 28 bezeichnet. Ein aus dem Kühler 27 tretender Produktstrom 29 wird aber nur zum Teil abgeführt (siehe Kopfprodukt 22). Ein anderer Teil, ein Rückfluss 30, wird wieder in die Kolonne 20 geleitet.

Figur 3 zeigt auch das Profil einer Temperatur T, die sich in der Destillationskolonne in Abhängigkeit der Höhe bzw. in Abhängigkeit der Stufenzahl der Destillationskolonne ausbildet. Die einzelnen Stufen der Kolonne sind durch gestrichelte Linien angedeutet und mit 31 bezeichnet. Eine Stufe ist mit $31_M$ bezeichnet. Es soll sich um die Stufe handeln, in der die Temperatur in der Messkolonne zwecks Temperaturregelung gemessen wird.

Zu erkennen ist, dass im Bereich des Kopfes 26 sich niedrigere Temperaturen einstellen als im Bereich eines Sumpfes 32. Das Profil der Temperatur stellt die besagte Stufenfunktion mit ihren unterschiedlichen Abschnitten dar, wie sie bereits in Zusammenhang mit Figur 1 beschrieben worden sind. Mit steigender Stufenzahl (gerechnet ab dem Kopf 26) steigt die Temperatur zum Sumpf 32 S-förmig an.

Durch die Verkleinerung des Dampfstromes 25 lässt sich das Profil der Temperatur 26 in Richtung des Sumpfes 32 verschieben. Wird der Dampfstrom 25 hingegen erhöht, wandert das Temperaturprofil, seine grundsätzliche Form in guter Näherung beibehaltend, in Richtung des Kopfes 26. Es hat sich herausgestellt, dass in guter Näherung ein linearer Zusammenhang besteht zwischen der Stufenzahl und dem Dampfstrom. Daher kann die Stufenzahl als relative Stellgröße verwendet werden.

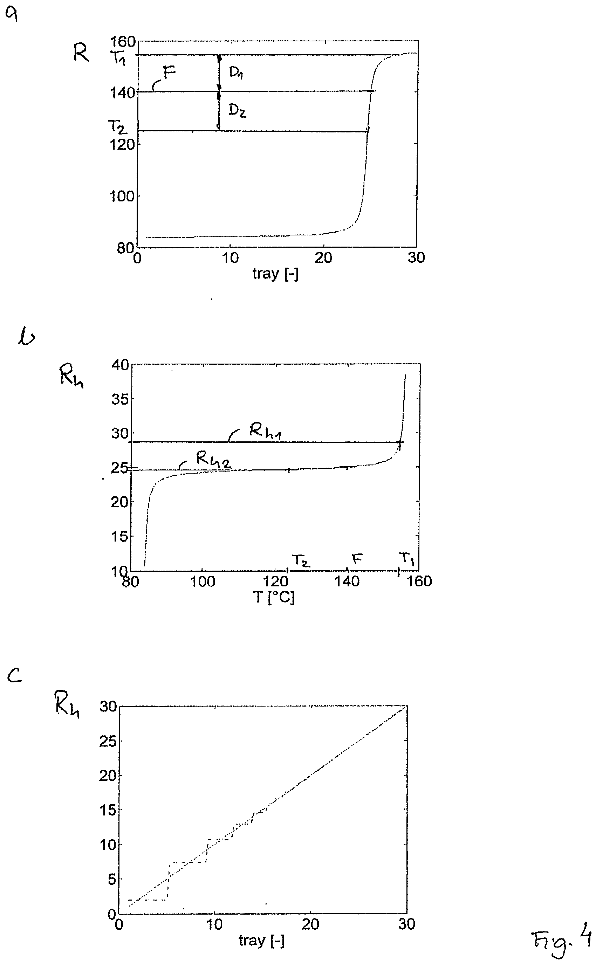

Figur 4a zeigt für ein Ausführungsbeispiel eine arctan-Funktion mit ermittelten Werten für die Konstanten a, b, c und d. Diese arctan-Funktion ist eine gute Näherung der durch eine thermodynamische Modellierung gewonnene Stufenfunktion in der Destillationskolonne 20 in Abhängigkeit der Stufenzahl tray:

$$T = f_{arctan}(tray) = 120 + 23{,}25 * \arctan[(tray - 24{,}6) * 3{,}22] \qquad (14)$$

Für kleine Stufenzahlen ergibt sich eine Temperatur gemäß Gleichung (14) von ca. 84°. Dies entspricht der Temperatur des ersten oder unteren Plateaus der approximierten Stufenfunktion. Für große Stufenzahlen folgt nach Gleichung (14) eine Temperatur von ca. 156° Grad, wodurch das obere Plateau nachgebildet wird. Die Lage des Wendepunkts der arctan-Funktion wird durch die Stufenzahl gleich 24,3 und die Temperatur gleich 120°Grad festgelegt.

Bei einer Regelabweichung D ermittelt der vorzugsweise als PID-Regler ausgebildete Regler 12 eine neue Stufenzahl, die sich dann aufgrund der bekannten Proportionalität in einen neuen Dampfstrom umrechnen lässt. Dadurch verschiebt sich das Temperaturprofil in der Kolonne 20 entsprechend, so dass die Differenz zwischen Ist-Temperatur an der Stufe $31_M$ und der Soll-Temperatur für diese Stufe kleiner und idealerweise zu null wird. Der Regler wird jedoch nicht mit den Größen R und F gespeist, sondern mit den jeweiligen Hilfsgrößen $R_h$ und $F_h$. Die Regelabweichung D entspricht somit der Hilfsführungsgröße $F_h$ abzüglich der Hilfsregelgröße $R_h$.

Gemäß Figur 4a soll beispielhaft die Führungsgröße F bzw. die Sollgröße für die zu regelnde Temperatur T 140° Grad betragen. In Figur 4a sind des Weiteren zwei Temperaturen $T_1$ und $T_2$ eingetragen. Die Temperatur $T_1$, $T_2$ liegen jeweils ca. 15° Grad von der Führungsgröße F entfernt. Es ergeben sich somit zwei betraglich gleich große Abweichungen $\Delta_1$, $\Delta_2$, nämlich einmal $\Delta_1$ = -15° und $\Delta_2$ = 15° Grad.

Bei Vorliegen der Temperatur $T_1$ wird anhand der Umkehrfunktion von der in Figur 4a dargestellten arctan-Funktion die Hilfsregelgröße $R_{h1}$ berechnet. Es ergibt sich ein Wert für $R_{h1}$, der ca. 29 beträgt. Die Hilfsführungsgröße $F_h$ beträgt hier ca. 25. Daraus ergibt eine Differenz von 4, die erfindungsgemäß als Regelabweichung D zur Berechnung der relativen Stellgröße zu Grunde gelegt wird. Gemäß Figur 4c beträgt die entsprechende relative Stellgröße ebenfalls 4, die sich dann unter Berücksichtigung der Proportionalitätskonstante in Gleichung (12) in die neue Dampfstrommenge bzw. in eine Änderung der Dampfstrommenge umrechnen lässt.

Wenn hingegen die Temperatur $T_2$ vorliegt, ergibt sich für den Regler eine Regelabweichung von nur ca. 0,5. Die Hilfsführungsgröße $F_h$ beträgt auch hier ca. 25, die Hilfsregelgröße $R_{h2}$ ca. 24,5. Entsprechend klein ist dann auch die vorzunehmende Änderung im Dampfstrom. Obwohl die Temperaturabweichungen von $T_1$ und $T_2$ zu der Führungsgröße T = 140° Grad jeweils gleich groß sind, führt das erfindungsgemäße Verfahren zu deutlich unterschiedlichen Reaktionen des Reglers 12. Befinden sich Führungsgröße und der Regelgröße in der Nähe des Wendepunkts der Approximationsfunktion, sind nur kleine Änderungen des Dampfstromes nötig, um die Temperatur anzuheben bzw. abzusenken. Die Regelung reagiert somit sehr weich. Bei großen Abständen zum Wendepunkt hingegen reagiert die Regelung deutlich härter. Durch das erfindungsgemäße Verfahren kann aber auf einen Regler mit gleichem Regelverhalten zugegriffen werden.

Da, wie den Figuren der Figur 2b und 4b zu entnehmen ist, die Umkehrfunktion an ihren Rändern des Wertebereichs von R große Steigungen aufweist, geht ein möglicher Messfehler des Sensors, mit dem die Regelgröße R ermittelt wird, mit einem entsprechend großen Faktor in die Hilfsregelgröße $R_h$ ein. Dies führt bei einer endlichen Sensorgenauigkeit zu einer Treppenfunktion, deren einzelne Stufen an den Rändern des Wertebereichs zu nennenswerten Abweichungen von der in den Figur 2c und 4c gezeigten geradlinigen Abhängigkeit führen. In Figur 4c ist eine solche Treppenfunktion angedeutet.

Da die arctan-Funktion (normiert mit dem Faktor $2/\pi$) und die aleq2-Funktion flacher verlaufen als die tanh-Funktion und die aleq1- Funktion , verstärkt die Umkehrfunktion der arctan-Funktion bzw. der aleq1- Funktion die Messwerte stärker. Das hat zur Folge, dass ein Temperaturband der Stufenfunktion durch die invertierte Sigmoid-Funktion in ein größeres (lineares) Band der Hilfsregelgröße umgerechnet wird. Dieses größere Band ist für eine Regelung vorteilhaft, da der Regler somit früher mitbekommt, dass der Prozess sich von einem Abschnitt der Stufenfunktion einem anderen Abschnitt der Stufenfunktion nähert. Dies ist insbesondere für eine begrenzte Messgenauigkeit des Sensors, die das Band der Hilfsregelgröße wiederum limitiert, wichtig. Die Sigmoid-Funktion gemäß Gleichung (10) weist gegenüber der Sigmoid-Funktion gemäß Gleichung () vergleichbare Vorteile hinsichtlich der Limitierung des Bands der Regelgröße durch Messfehler auf.

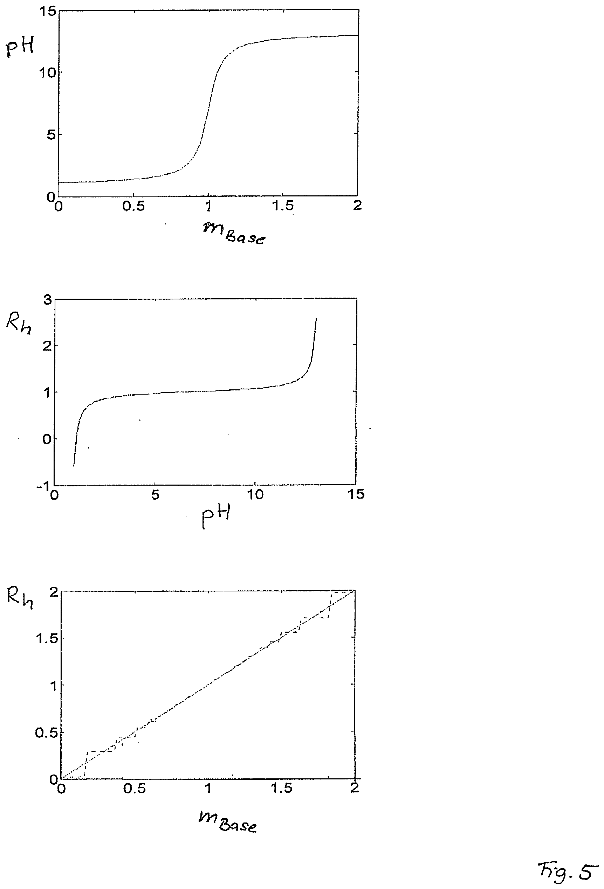

Die Figuren 5a bis 5c zeigen die Approximationsfunktion für eine Titrationskurve einer Säure-Base-Mischung (Figur 5a), die zugehörige Umkehrfunktion (Figur 5b) sowie die linearisierte Zusammenhang zwischen der Hilfsführungsgröße $R_h$ in Form des pH-Wertes der Mischung und der Stellgröße S in Form eines Basestroms (Figur 5c). Auch hier wurde als Approximationsfunktion eine arctan-Funktion gemäß Gleichung (6) gewählt. Die Approximation der Titrationskurve erfolgt auch hier durch die Festlegung der Konstanten a, b, c, d. Es ergibt sich:

$$pH = f_{\arctan}(m_{Base}) = 7 + 3{,}923 * \arctan[(m_{Base} - 1) * 15{,}284] \tag{15}$$

pH      pH-Wert der Säure-Base-Mischung; und
$m_{Base}$      Basestrom in kg/h.

Der Wendepunkt der Funktion gemäß Gleichung (15) liegt bei einem Basestrom mBase = 1 [kg/h] und pH = 7. Der Wertebereich für die Funktionswerte der arctan-Funktion erstreckt sich zwischen pH = 0,8 und 13,2. Durch die Umkehrfunktion wird der stark nichtlineare Zusammenhang zwischen pH-Wert und Basestrom auf eine lineare Abhängigkeit reduziert, wodurch unter Verwendung gewöhnlicher PID-Regler der Zusammenhang zwischen pH-Wert und Basestrom stabil und zuverlässig geregelt werden kann. Wie auch in Figur 5c dargestellt, führt eine endliche Sensorgenauigkeit an den Rändern des Wertebereiches des Basestroms zu einer Treppenfunktion, die sich von der Geraden merkbar unterscheidet.

**Bezugszeichenliste**

10    Block/ technischer Prozess
11    Störgröße
12    Regler
13    erster Abschnitt
14    zweiter Abschnitt
15    dritter Abschnitt
16    Block/Umwandlung

17    Block/Umwandlung
18a    Messung Anlage
18b    Messung Anlage
18c    Messung Anlage
18d    Messung Anlage
19    Block/Approximation Stufenfunktion

20    Destillationskolonne/Kolonne
21    Gemisch
22    Destillat/Kopfprodukt
23    Sumpfprodukt
24    Verdampfer
25    Dampfstrom
26    Kopf
27    Kondensator
28    Wärme
29    Produktstrom
30    Rückfluss
31    Stufe
32    Sumpf

**Patentansprüche**

1.    Verfahren zur Regelung eines technischen Prozesses mit einem Regler (12), der eine Stellgröße (S) erzeugt, wobei eine Regelgröße (R) in etwa eine Stufenfunktion in Abhängigkeit der Stellgröße (S) ist, bei der die Regelgröße (R):

- in einem ersten Abschnitt (13) eines Wertebereichs der Stellgröße (S) ein erstes Plateau mit nahezu gleichen Werten ausbildet;
- in einem zweiten Abschnitt (14) des Wertebereichs der Stellgröße (S) einen steilen Übergang von dem ersten Plateau zu einem zweiten Plateau mit ebenfalls nahezu gleichen Werten aufweist; und
- in einem dritten Abschnitt (15) des Wertebereichs der Stellgröße (S) das zweite Plateau ausbildet,

**dadurch gekennzeichnet, dass**

a) die Stufenfunktion durch eine Approximationsfunktion (f) in Form einer Sigmoid-Funktion approximiert wird;
b) für die Approximationsfunktion eine Umkehrfunktion ($f^{-1}$)gebildet wird;
c) die Regelgröße (R) und eine Führungsgröße (F), welche einen Sollwert für die Regelgröße (R) darstellt, mittels der Umkehrfunktion in eine Hilfsregelgröße ($R_h$) und in eine Hilfsführungsgröße ($F_h$) transformiert werden; und
d) die Hilfsregelgröße ($R_h$) und die Hilfsführungsgröße ($F_h$) dem Regler als Basis für die Ermittlung der Stellgröße (S) dienen.

2.    Verfahren nach Anspruch 1, **dadurch gekennzeichnet, dass** die Sigmoid Funktion eine arctan-Funktion, eine tanh-Funktion, eine algebraische Funktion aleq1 oder eine algebraische Funktion aleq2 ist.

3.    Verfahren nach Anspruch 2, **dadurch gekennzeichnet, dass** die arctan-Funktion die Form aufweist:

$$R = f_{\mathrm{arctan}}(S) = a + b * \arctan[(S - c) * d]$$

R Regelgröße;
S Stellgröße;
a erste Konstante;
b zweite Konstante;
c dritte Konstante; und
d vierte Konstante.

4. Verfahren nach Anspruch 2, **dadurch gekennzeichnet, dass** die tanh-Funktion die Form aufweist:

$$R = f_{\tanh}(S) = a + b * \tanh[(S-c)*d] = a + b * \frac{e^{[2(S-c)*d]} - 1}{e^{[2(S-c)*d]} + 1}$$

R Regelgröße;
S Stellgröße;
a erste Konstante;
b zweite Konstante;
c dritte Konstante; und
d vierte Konstante.

5. Verfahren nach einem der Ansprüche 1 bis 4, **dadurch gekennzeichnet, dass** bei der Approximation die Stufenfunktion gewählt wird, die von einer relativen Stellgröße $S_R$ abhängt, die im Wesentlichen proportional zu der Stellgröße S ist.

6. Verfahren nach einem der Ansprüche 3 bis 5, **dadurch gekennzeichnet, dass** die zweite Konstanten (b) und vierte Konstante (d) über eine Least-Squares Optimierung ermittelt werden

7. Verfahren nach einem der Ansprüche 3 bis 6, **dadurch gekennzeichnet, dass** während des Prozesses anhand von online-Messungen die Konstanten (a, b, c, d), zumindest die zweite Konstanten (b) und die vierte Konstante (d) ermittelt werden.

8. Verfahren nach einem der Ansprüche 1 bis 7, **dadurch gekennzeichnet, dass** als Regler (12) ein PID-Regler oder ein MPC-Regler verwendet wird.

9. Verfahren nach einem der Ansprüche 1 bis 8, **dadurch gekennzeichnet, dass** der technische Prozess die Destillation in einer Destillationskolonne (20) ist, wobei die Regelgröße (R) eine Temperatur ist.

10. Verfahren nach Anspruch 9, **dadurch gekennzeichnet, dass** die Stellgröße (S) eine Energiezufuhr in der Kolonne (20), ein Rücklaufstrom (30)oder ein Verhältnis zwischen einem Destillat (22) aus der Kolonne (20) und dem Rücklaufstrom (30) ist.

11. Verfahren nach Anspruch 9 oder 10, **dadurch gekennzeichnet dass** die relative Stellgröße ($S_R$) eine Stufenzahl der Kolonne (20) ist.

12. Verfahren nach einem der Ansprüche 1 bis 8, **dadurch gekennzeichnet, dass** der technische Prozess die Neutralisation einer Säure mit einer Base ist, wobei die Regelgröße (R) der pH-Wert einer Mischung von Säure und Base ist.

13. Verfahren nach Anspruch 12, **dadurch gekennzeichnet, dass** die Stellgröße (S) ein Massenstrom der Base oder ein Massenstrom der Säure ist.

14. Verfahren nach Anspruch 12 oder 13, **dadurch gekennzeichnet, dass** die relative Stellgröße ($S_R$) ein Verhältnis von Stellgröße (Massestrom der Säure bzw. Massenstrom der Base) zum Massenstrom des zu neutralisierenden Stroms ist.

## Claims

1. Method for controlling a technical process with a controller (12), which produces a correcting variable (S), wherein a controlled variable (R) is approximately a step function on the basis of the correcting variable (S), in the case of which the controlled variable (R)

   - in a first section (13) of a range of values of the correcting variable (S) forms a first plateau with virtually identical values,
   - in a second section (14) of the range of values of the correcting variable (S) has a steep transition from the first plateau to a second plateau with likewise virtually identical values; and
- in a third section (15) of the range of values of the correcting variable (S) forms the second plateau,

**characterized in that**

a) the step function is approximated by an approximation function (f) in the form of a sigmoid function;
b) an inverse function ($f^{-1}$) is formed for the approximation function;
c) the controlled variable (R) and a reference variable (F), which represents a desired value for the controlled variable (R), are transformed by means of the inverse function into an auxiliary controlled variable ($R_h$) and into an auxiliary reference variable ($F_h$); and
d) the auxiliary controlled variable ($R_h$) and the auxiliary reference variable ($F_h$) serve the controller as a basis for determining the correcting variable (S).

2. Method according to Claim 1, **characterized in that** the sigmoid function is an arc tan function, a tan h function, an algebraic function aleq1 or an algebraic function aleq2.

3. Method according to Claim 2, **characterized in that** the arc tan function has the form:

$$R = f_{\arctan}(S) = a + b * \arctan[(S - c) * d]$$

R controlled variable;
S correcting variable;
a first constant;
b second constant;
c third constant; and
d fourth constant.

4. Method according to Claim 2, **characterized in that** the tan h function has the form:

$$R = f_{\tanh}(S) = a + b * \tanh[(S - c) * d] = a + b * \frac{e^{[2(S-c)*d]} - 1}{e^{[2(S-c)*d]} + 1}$$

R controlled variable;
S correcting variable;
a first constant;
b second constant;
c third constant; and
d fourth constant.

5. Method according to one of Claims 1 to 4, **characterized in that** selected in the approximation is the step function that depends on a relative correcting variable $S_R$ which is essentially proportional to the correcting variable S.

6. Method according to one of Claims 3 to 5, **characterized in that** the second constant (b) and fourth constant (d) are determined by a least squares optimization.

7. Method according to one of Claims 3 to 6, **characterized in that** during the process the constants (a, b, c, and d), at least the second constant (b) and the fourth constant (d), are determined on the basis of online measurements.

8. Method according to one of Claims 1 to 7, **characterized in that** a PID controller or an MPC controller is used as the controller (12).

9. Method according to one of Claims 1 to 8, **characterized in that** the technical process is the distillation in a distillation column (20), where the controlled variable (R) is a temperature.

10. Method according to Claim 9, **characterized in that** the correcting variable (S) is a supply of energy in the column (20), a reflux flow (30) or a ratio between a distillate (22) from the column (20) and the reflux flow (30).

11. Method according to Claim 9 or 10, **characterized in that** the relative correcting variable ($S_R$) is a number of stages of the column (20).

12. Method according to one of Claims 1 to 8, **characterized in that** the technical process is the neutralization of an acid with a base, where the controlled variable (R) is the pH of a mixture of acid and base.

13. Method according to Claim 12, **characterized in that** the correcting variable (S) is a mass flow of the base or a mass flow of the acid.

14. Method according to Claim 12 or 13, **characterized in that** the relative correcting variable ($S_R$) is a ratio of the correcting variable (mass flow of the acid or mass flow of the base) to the mass flow of the flow to be neutralized.

## Revendications

1. Procédé de régulation d'un processus technique avec un régulateur (12), lequel génère une grandeur de commande (S), une grandeur réglée (R) étant dépendante de la grandeur de commande (S) approximativement dans une fonction discontinue, procédé selon lequel la grandeur réglée (R) :

   - dans une première portion (13) d'une plage de valeurs de la grandeur de commande (S), forme un premier plateau avec des valeurs quasiment identiques ;
   - dans une deuxième portion (14) de la plage de valeurs de la grandeur de commande (S), présente une transition brusque du premier plateau vers un deuxième plateau ayant également des valeurs quasiment identiques ; et
   - forme le deuxième plateau dans une troisième portion (15) de la plage de valeurs de la grandeur de commande (S),

   **caractérisé en ce que**

   a) la fonction discontinue est définie approximativement par une fonction d'approximation (f) sous la forme d'une fonction sigmoïde ;
   b) une fonction inverse ($f^{-1}$) est formée pour la fonction d'approximation ;
   c) la grandeur réglée (R) et une grandeur de référence (F), laquelle représente la valeur de consigne pour la grandeur réglée (R), sont transformées au moyen de la fonction inverse en une grandeur réglée auxiliaire ($R_h$) et en une grandeur de référence auxiliaire ($F_h$) ; et
   d) la grandeur réglée auxiliaire ($R_h$) et la grandeur de référence auxiliaire ($F_h$) servent au régulateur comme base pour la détermination de la grandeur de commande (S) .

2. Procédé selon la revendication 1, **caractérisé en ce que** la fonction sigmoïde est une fonction arctan, une fonction tanh, une fonction algébrique aleq1 ou une fonction algébrique aleq2.

3. Procédé selon la revendication 2, **caractérisé en ce que** la fonction arctan présente la forme :

$$R = f_{arctan}(S) = a + b*arctan[(S-c)*d]$$

   R grandeur réglée ;
   S grandeur de commande ;
   a première constante ;
   b deuxième constante ;
   c troisième constante ; et
   d quatrième constante.

4. Procédé selon la revendication 2, **caractérisé en ce que** la fonction tanh présente la forme :

$$R = f_{tanh}(S) = a+b*tanh[(S-c)*d] = a+b*\frac{e^{[2(S-c)*d]}-1}{e^{[2(S-c)*d]}+1}$$

R grandeur réglée ;
S grandeur de commande ;
a première constante ;
b deuxième constante ;
c troisième constante ; et
d quatrième constante.

5. Procédé selon l'une des revendications 1 à 4, **caractérisé en ce que** lors de l'approximation la fonction discontinue sélectionnée est celle qui dépend d'une grandeur de commande $S_R$ relative qui est sensiblement proportionnelle à la grandeur de commande S.

6. Procédé selon l'une des revendications 3 à 5, **caractérisé en ce que** la deuxième constante (b) et la quatrième constante (d) sont déterminées par le biais d'une optimisation des moindres carrés.

7. Procédé selon l'une des revendications 3 à 6, **caractérisé en ce que** pendant le processus, au moins la deuxième constante (b) et la quatrième constante (d) sont déterminées à l'aide de mesures en ligne des constantes (a, b, c, d).

8. Procédé selon l'une des revendications 1 à 7, **caractérisé en ce que** le régulateur (12) utilisé est un régulateur PID ou un régulateur MPC.

9. Procédé selon l'une des revendications 1 à 8, **caractérisé en ce que** le processus technique est la distillation dans une colonne de distillation (20), la grandeur réglée (R) étant une température.

10. Procédé selon la revendication 9, **caractérisé en ce que** la grandeur de commande (S) est un apport d'énergie dans la colonne (20), courant de retour (30) ou un rapport entre un distillat (22) issu de la colonne (20) et le courant de retour (30).

11. Procédé selon la revendication 9 ou 10, **caractérisé en ce que** la grandeur de commande relative ($S_R$) et un nombre d'étages de la colonne (20).

12. Procédé selon l'une des revendications 1 à 8, **caractérisé en ce que** le processus technique est la neutralisation d'un acide avec une base, la grandeur réglée (R) étant le pH d'un mélange d'acide et de base.

13. Procédé selon la revendication 12, **caractérisé en ce que** la grandeur de commande (S) est un débit massique de la base ou un débit massique de l'acide.

14. Procédé selon la revendication 12 ou 13, **caractérisé en ce que** la grandeur de commande relative ($S_R$) est un rapport entre la grandeur de commande (débit massique de l'acide ou débit massique de la base) et le débit massique du courant à neutraliser.

EP 3 314 336 B1

F

16

Fh

+ − D

12

S

R

S

13 14 15 10

11

Rh

17

R

Fig. 1

EP 3 314 336 B1

a

b

c

Fig. 2

17

Fig. 3

Fig. 4

Fig. 5

Fig. 1b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6207936 B